# EUROPEAN PATENT SPECIFICATION

(11) **EP 1 575 401 B1**
(45) Date of publication and mention of the grant of the patent: **03.09.2008**
(21) Application number: 03773902.6
(22) Date of filing: 26.11.2003
(51) Int. Cl.: A47F 5/00

(54) **SYSTEM AND CLAMP FOR SUPPORTING ARTICLES**
SYSTEM UND SPANNVORRICHTUNG ZUM STÜTZEN VON ARTIKELN
SYSTEME ET BRIDE DE SERRAGE POUR SUPPORTER DES ARTICLES

(30) Priority: 26.11.2002 ZA 200209606
(43) Date of publication of application: 21.09.2005
(73) Proprietor: Meltzer, Michael, 8005 Sea Point (ZA)
(72) Inventor: Meltzer, Michael, 8005 Sea Point (ZA)
(74) Representative: Newell, Campbell
(86) International application number: PCT/IB2003/005426
(87) International publication number: WO 2004/047592

(56) References cited:
- CA-A- 973 840
- DE-A- 3 404 950
- GB-A- 1 079 624
- US-A- 4 736 921
- US-A- 4 886 237
- US-A- 5 386 961

## Description

### FIELD OF THE INVENTION

THIS INVENTION relates to supporting articles for storage and/or display purposes, or the like. In particular, the invention relates to a system and to a clamp for supporting at least one article. Such a system, and clamp, are disclosed e.g. in US 5386 961*,* and US 1079624.

### BACKGROUND TO THE INVENTION

A need often arises to support a plurality of articles in a certain way, especially in the retail environment, which displays need to be changed frequently, to adapt to changing circumstances, such as changing products, changing advertisement strategies, or the like. A need often arises for a system that can support an indeterminate number of articles in an indeterminate number of ways, which can be changed with little effort.

### SUMMARY OF THE INVENTION

According to a first aspect of the invention there is provided a system for supporting at least one article, said system including:
a support structure including at least one elongate element;
at least one clamp defining a recess flanked by two resilient arms and being removably attachable to the elongate element by receiving the elongate element in the recess in a clipping fashion, and which can be held releasably in position on the elongate element by inwardly resilience of the arms; and
an article support formation, attachable to the clamp. Attachment formations in the form of a plurality of generally axially extending ridges are defined on the outer periphery of the clamp, to which at least one article support formation is releasably attachable, by receiving the attachment formation in a complementary formation in the form of a recess, in which the ridges are receivable in a sliding fashion. The ridges and the complementary recess each have a dovetail cross-sectional profile.

The word "clamp" is used to indicate a device which is attachable to an article by way of the clamping action of two or more resilient features. Such a device is sometimes also called a "clasp".

The elongate element may have a predetermined cross-sectional profile, such as a cylindrical or square profile, and the clamp may define a part complemental profile on an inner periphery of the recess, such as a part cylindrical profile or a part rectangular profile.

A number of element engagement formations may be provided on the inner periphery of the clamp recess, to engage an elongate element, resiliently.

Each arm of the clamp may include a guide element, defining a generally radially extending guide surface, at the end of the arm, to assist in alignment of the elongate element with an opening defined between the ends of the two arms, when receiving the elongate element in the recess.

The clamp may include a catch, attachable to ends of the two arms, and configured to exert an inward bias on the ends of the arms, to urge them closer together and thereby assist in holding the elongate element in position within the recess.

The catch may include a main part, pivotally attachable to one arm of the clamp, and a linkage part, pivotally attachable or preferably attached, to the end of the other arm of the clamp. The main part and linkage part may be pivotally connected, so that the catch may operate in an over-centred configuration, in which the main part and linkage part may be oriented at a large angle relative to each other, when the catch is in a free condition, and wherein the main part and linkage part may be oriented at a small angle relative to each other, when the catch is in a gripping condition, with a resilient bias of the main part retaining the catch in the gripping condition.

It is to be understood that, when the main part and the linkage part are oriented at a small angle relative to each other, the distance between the remote ends of these two parts that are not pivotally attached to each other, but are attachable/attached to the ends of the clamp arms, are at their closest together.

A support formation may include at least one article engagement formation, for supporting an article, such as a container defining a recess in which articles are receivable, a platform, a clamp, or the like.

The system may include a light fitting, attachable to the clamp and the invention extends to a clamp as described hereinabove.

The invention will now be described, by way of non-limiting example, with reference to the accompanying diagrammatic drawings.

### BRIEF DESCRIPTION OF THE DRAWINGS

Figure 1 shows a top plan view of part of a support system in accordance with a first embodiment of the invention;
Figure 2 shows a top plan view of the system of Figure 1, including a clamp in accordance with a second embodiment of the invention;
Figure 3 shows a detailed top plan view of part of the system of Figure 1, with a catch in its gripping condition;
Figures 4A, 4B, 4C and 4D show three-dimensional views of the system of Figure 1;
Figure 5 shows a three-dimensional view the system of Figure 1, including an article support formation in accordance with a third embodiment of the invention;
Figure 6 shows a three-dimensional view the system of Figure 1, including an article support formation in accordance with a fourth embodiment of the invention; and
Figure 7 shows a three-dimensional view of the system of Figure 1, including a light fitting in accordance with a fifth embodiment of the invention.

### DETAIL DESCRIPTION OF THE DRAWINGS

Referring to the drawings, a system in accordance with the invention, for supporting at least one article, is generally indicated by reference numeral 10.

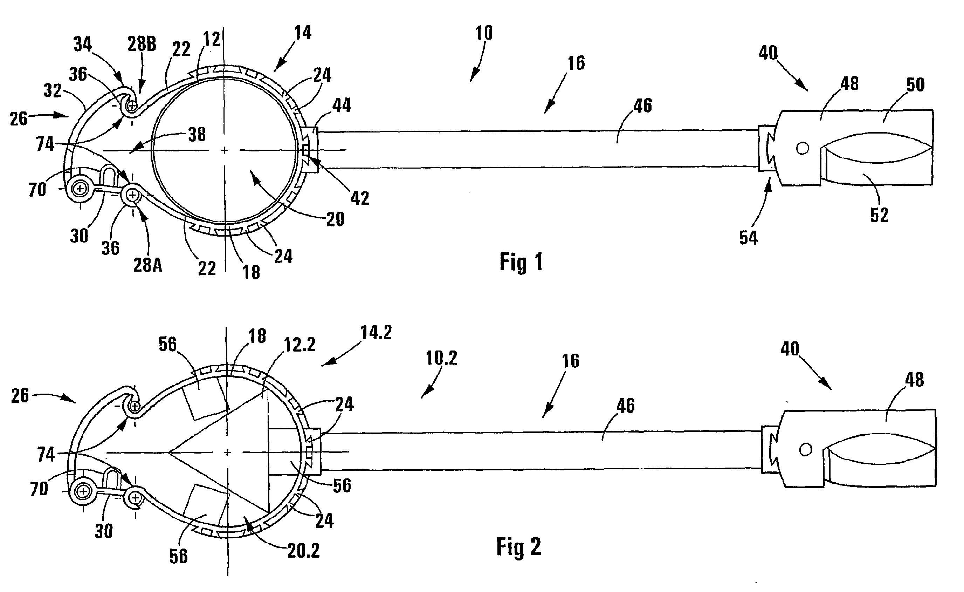

Referring to Figures 1, 3 and 4 of the drawings, the system 10 typically includes a support structure comprising a number of elongate elements in the form of cylindrical poles 12 onto which a number of clamps 14 are attachable, with a number of article support formations 16 attachable to each clamp. However, for the purposes of illustration, in each of the drawings, only a short length of a pole 12, one clamp 14 attached to the pole, and one article support formation 16 attached to the clamp, are shown.

The clamp 14 includes a generally u-shaped body 18 defining an internal recess 20, with a part cylindrical internal profile, complemental to the circumference of the pole 12. The body 18 also defines two resilient arms 22, flanking the recess 20. The resilience of the body 18 is such that the pole 12 is removably receivable in the recess 20 in a clipping fashion, and is held in position within the recess by the inwardly resilience of the arms 22.

A number of receiving formations in the form of dovetail-profiled ridges 24 extend in a generally parallel arrangement, in an axial direction on the outer periphery of the body 18.

The clamp includes a catch 26, configured to urge the ends 28 of the arms 22 closer together, to enhance the resilience with which the arms engage the pole 12. The catch 26 includes a linkage part 30, pivotally attached to an end 28A of one arm 22, and pivotally attached to a main part 32 of the catch 26. The main part 32 includes a free end 34 that is releasably attachable to the end 28B of the other arm 22.

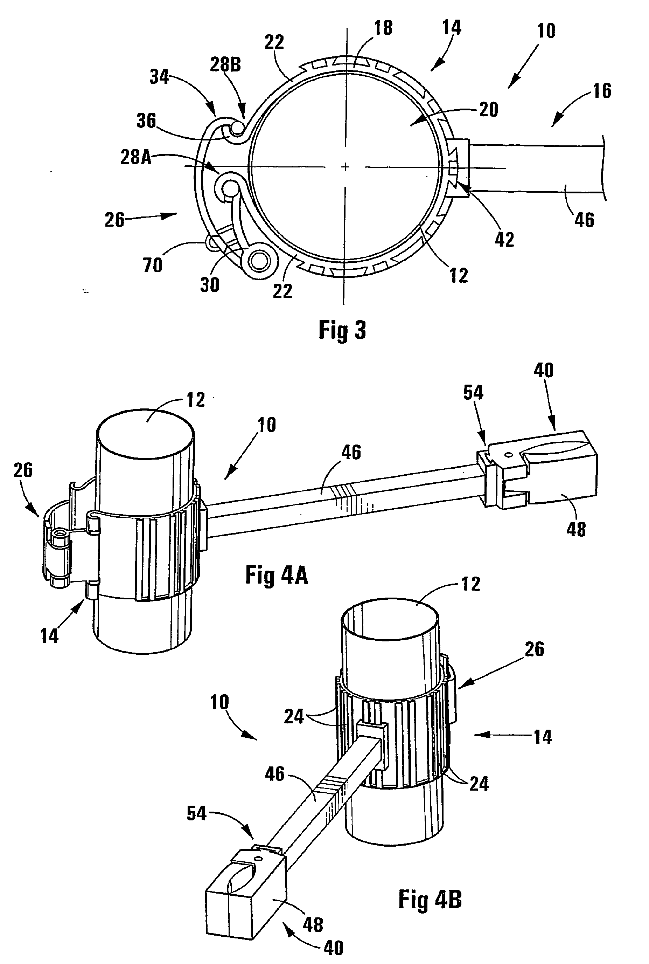

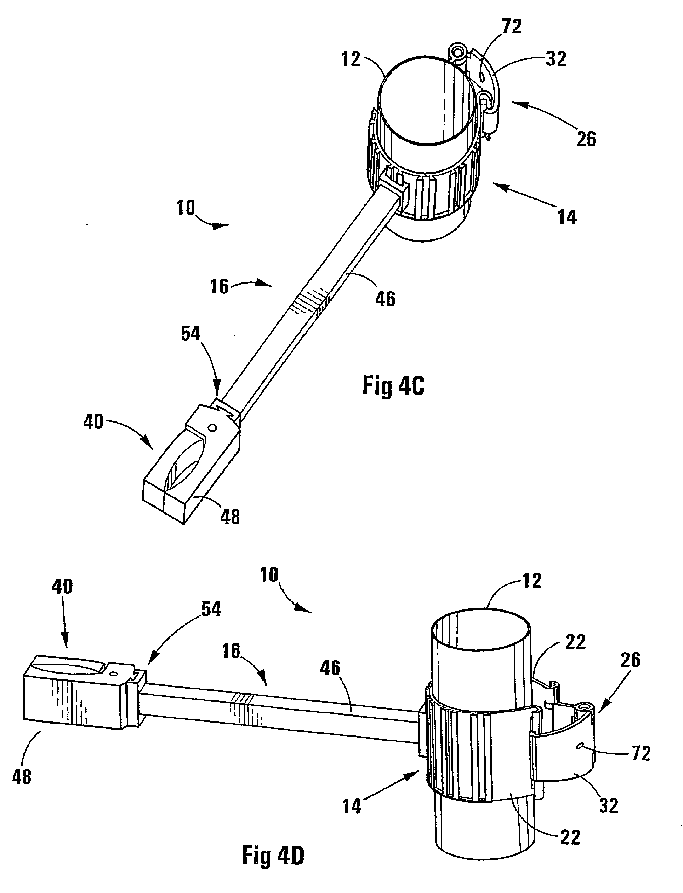

The linkage part 30 is shorter than the main part 32, and the catch 26 can be operated in a so-called "over-centre" arrangement. The catch 26 is shown in Figures 1 and 4 of the drawings in a free condition, in which the linkage part 30 and the main part 32 are disposed at a relatively large angle relative to each other. In the free condition, the free end 34 can be released from a hook formation 36 defined on the end 28B, to allow the pole 12 to pass through a receiving open 38 defined between the ends 28.

The catch 26 can be clipped in over-centre fashion, to a gripping condition shown in Figure 3 of the drawings, by pressing the main part 32 towards the linkage part 30, so that the linkage part pivots into a position in which it abuts the main part on an inside of the main part, and so that the linkage part and main part are oriented at a small angle relative to each other. In the gripping condition, the ends 28 are urged closer together by the catch 26, and the catch is held in the gripping condition, by an inwardly bias exerted by the main part 32, on the hook formation 36 and on the linkage part 30.

The catch 26 includes locking means in the form of a loop formation 70 defined on the linkage part 30, and a recess 72 defined in the main part 32, through which the loop formation can extend. When the catch 26 is in its gripping condition, the loop formation 70 extends through the recess 72 and can receive a shackle of a padlock (not shown) or the like, to prevent withdrawal of the loop formation through the recess 72, and thus prevent movement of the main part 32 from the linkage part 30, so that the catch 26 is locked in its gripping condition, to prevent tampering, theft, or the like.

Instead of using the catch 26, the clamp 14 may be held in position on the pole 12, by merely relying on the resilience of the body 18 and arms 22.

Generally radially extending guide surfaces 74 are defined on the ends 28 of the arms 22, which act as guide elements, to assist in aligning the pole 12 with the opening 38, when the pole is received in the recess 20.

The article support formation 16 is releasably attachable to the clamp 14 by slideable engagement of one of the ridges 24 into a complementary formation in the form of a dovetail-profiled recess 42, defined in an attachment formation 44 of the article support formation. The article support formation 16 includes an arm 46 extending from the attachment formation 44, and includes an article engagement formation 40 in the form of a clamp 48, at the end of the arm, remote from the attachment formation 44. The clamp 48 has a fixed jaw 50, and a pivoting jaw 52, pivotally displaceable relative to the fixed jaw, so that articles can be clinched between the two jaws. The clamp 48 is releasably attached to the arm 46 by way of a further dovetail attachment 54.

In another embodiment of the invention (not shown), the article support formation 16 does not include an arm 46, but the article engagement formation 40 is closely connected to the attachment formation 44, to support an article closer to the clamp 14 and pole 12.

Referring to Figures 2 and 5 to 7 of the drawings, parts of a support system that are identical to corresponding parts in the support system 10 shown in Figures 1, 3 and 4 of the drawings, are indicated by the same reference numerals, whereas parts that are similar, are indicated by like reference numerals, but are identified with suffixes, corresponding to the relevant embodiment of the invention.

Referring to Figure 2 of the drawings, a support system 10.2 in accordance with a second embodiment of the invention, includes a clamp 14.2, releasably attachable to a pole 12.2 with a triangular cross-sectional profile. The clamp 14.2 includes three spaced, resiliently compressible element engaging formations 56, attached to an inner periphery of the recess 20.2. The element engagement formations 56 are slightly compressed when the clamp 14.2 is attached to the pole 12.2, by over-centred closing of the catch 26.

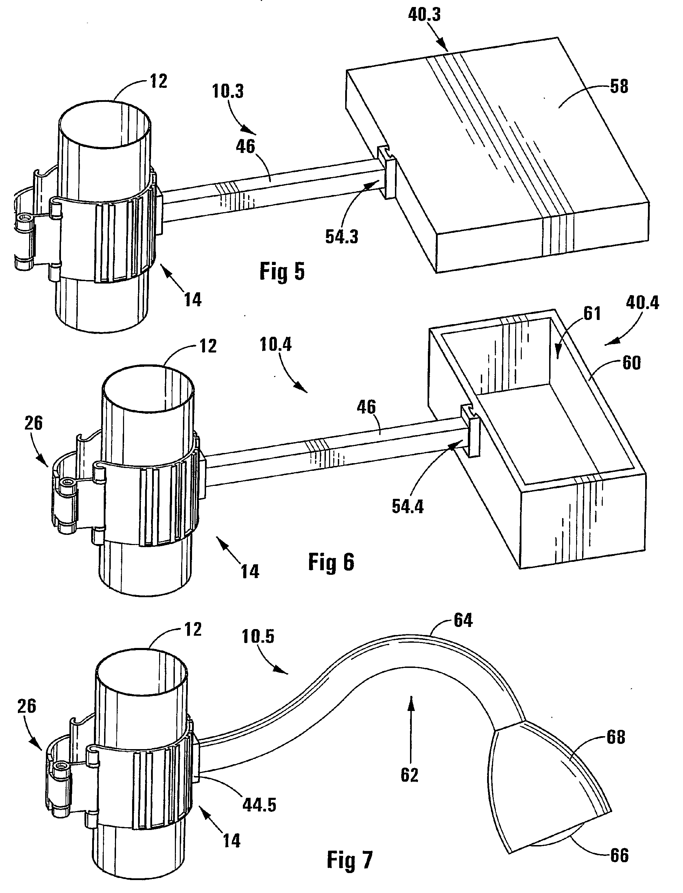

Referring to Figure 5 of the drawings, an article support system 10.3 in accordance with a third embodiment of the invention, includes an article engagement formation 40.3 in the form of a platform 58. The platform 58 is attachable to the arm 46 in a dovetail arrangement 54.3, in similar fashion to the clamp 48 shown in Figures 1 to 3 of the drawings.

Referring to Figure 6 of the drawings, an article support system 10.4 in accordance with a fourth embodiment of the invention, includes an article engagement formation 40.4 in the form of a container 60. The container 60 defines an internal recess 61 in which articles are receivable, and is attachable to the arm 46 in a dovetail arrangement 54.4, in similar fashion to the clamp 48 shown in Figures 1 to 3 of the drawings.

Referring to Figure 7 of the drawings, the system 10.5 includes a light fitting 62 in accordance with a fifth embodiment of the invention. The light fitting 62 includes an attachment formation 44.5, attachable to the clamp 14, a flexible arm 64, a light bulb 66 disposed at a remote end of the arm 64, and a light shield 68 extending in part around the light bulb 66. The light shield 68 allows light from the light bulb 66 to be directed in spot light-fashion, while the flexibility of the arm 64 allows the light bulb and light shield to be manoeuvred, to direct the light to a specific object.

In use, one or more poles 12 are erected in the vicinity where articles are to be supported or displayed. The poles 12 can be erected in any suitable fashion, e.g. by providing a platform (not shown) at the bottom of a pole, fixedly attaching a top and/or bottom of the pole to adjacent structures such as a floor or ceiling, or the like.

A number of clamps 14 are attached to the poles 12, as described hereinabove and a number of article support formations 16 and/or light fittings 62 are attached to the clamps. Articles to be supported are clasped within the jaws 50,52 of the clamp 48, are placed on the platform 58 or inside the recess 61 of the container 60, as the case may be, to suite the requirements for supporting or displaying the articles. The articles can also be illuminated by directing light from the light bulb 66 to particular articles.

It is to be appreciated that a number of article support formations 16 and/or light fittings 62 can be attached to each clamp 14, and a number of clamps 14 can be attached to each pole 12.

The attachment of clamps 14 to the poles 12 is releasable, so that clamps can be removed, replaced, repositioned, etc. for an unlimited number of times. Similarly, the attachment of the article support formations 16 and/or light fittings 62 to the clamps 14 is releasable, so that the article support formations and/or light fittings can be removed, replaced, repositioned, etc., and the attachment of article engagement formations in the form of a clamps 48, platforms 58 and/or containers 60, to the arms 46, is releasable, so that these articles can also be removed, replaced, etc. The changeability of the system 10 allows its configuration to be changed for an unlimited number of times, with ease.

The invention illustrated holds the advantages of allowing articles to be supported in an unlimited number of support configurations, and allowing the support configurations to be changed quickly and easily, to an unlimited number of different configurations.

The invention illustrated holds the further advantages of low cost and simplicity of construction and operation, and of the versatility of the article engagement formations, which allows articles of a great variety of shapes and sizes to be supported in the system 10.

## Claims

1. A system (10) for supporting at least one article, said system includng:
a support structure including at least one elongate element (12);
at least one clamp (14) defining a recess (20), flanked by two resilient arms (22) and being removably attachable to the elongate element (12), the clamp (14) being removably attachable, to the elongate element (12) by receiving the elongate element (12) in the recess (20) in a clipping fashion, to be releasably head in position on the elongate element (12) by inwardly resilience of the arms (22); and
an article support formation (16), attachable to the clamp, (14), wherein a plurality of attachment formations in the form of a plurality of ridges (24) are defined on an outer periphery of the clamp. (14), to which at least one article support formation (16) is releasably attachable, by receiving the attachment formation (24) in a complementary formation in the form of a recess (42), defined on the article support formation (16), in which the ridges (24) are receivable in a sliding fashion, **characterised in that** the ridges (24) and the complementary recesses (42) each have a dovetail cross-sectional profile.

2. A system (10) as claimed in Claim 1, **characterised in that** at least one elongate element (12.2) has a non-round cross-sectional profile and a number of element engagement formations (56), are provided on the inner periphery of the clamp recess (20), to engage the cross-sectional periphery of the non-round elongate element (12.2), resiliently.

3. A system (10) as claimed in Claim 1, wherein the clamp (14) includes a catch (26), attachable to ends (28) of the two arms (22) and configured to exert an inward bias on the ends (28) of the arms (22), to urge them closer together and thereby assist in holding the elongate element (12) in position within the recess (20), **characterised in that** the catch (26) includes a main part (32), pivotally attachable to one arm (22) of the clamps (14), and a linkage part (30), pivotally attachable to the end (28) of the other arm (22) of the clamp (14), the main part (32) and linkage part (30) being pivotally connected, so that the catch (26) can operate in an over-centred configuration, in which the main part (32) and linkage part (30) can be oriented at a large angle relative to each other, when the catch (26) is in a free condition, and wherein the main part (32) and linkage part (30) can be oriented at a small angle relative to each other, when the catch (26) is in a gripping condition, with a resilient bias of the main part (32) retaining the catch (26) in the gripping condition.

4. A system (10) as claimed in Claim 1, **characterised in that** the support formation. (16) defines at least one article engagement formation (40) which includes a clamp (48) for supporting an article by clinching it between jaws (50, 52) of the clamp (48).

5. A system as claimed in Claim 1, **characterised in that** it includes a light fitting (62), attachable to the clamp (14).

6. A clamp (14) that is attachable to an elongate element (12) and to which an article support formation (16) is attachable according to Claim 1, the clamp (14) defining a recess (20) flanked by two resilient arms (22) so that the elongate element (12) can be received in the recess (20) in a clipping fashion, to be releasably held in position by the inwardly resilience of the arms (22),
wherein a plurality of attachment formations in the form of a plurality of ridges (24) are defined on an outer periphery of the clamp (14), to which at least one article support formation (16) is releasably attachable, by receiving the attachment formation (24) in a complementary formation in the form of a recess (42), defined on the article support formation (16), in which the ridges (24) are receivable in a sliding fashion, **characterised in that** the ridges (24) and the complementary recesses (42) each have a dovetail cross-sectional profile.

## Patentansprüche

1. System (10) zum Stützen wenigstens eines Artikels, wobei das System Folgendes einschließt:
eine Stützstruktur, die wenigstens ein längliches Element (12) einschließt,
wenigstens eine Klemme (14), die eine (20) definiert, die von zwei elastischen Armen (22) flankiert wird und lösbar an dem länglichen Element (12) befestigt werden kann, wobei die Klemme (14) durch Aufnehmen des länglichen Elements (12) in der Aussparung (20) auf eine klammernde Weise lösbar an dem länglichen Element (12) befestigt werden kann, um durch die nach innen gerichtete Elastizität der Arme (22) lösbar in Position an dem länglichen Element (12) gehalten zu werden, und
eine Artikelstürzformation (16), die an der Klemme (14) befestigt werden kann, wobei mehrere Befestigungsformationen in der Form mehrerer Stege (24) an einem Außenumfang der Klemme (14) definiert werden, woran wenigstens eine Artikelstützformation (16) lösbar befestigt werden kann, durch Aufnehmen der Befestigunsformation (24) in einer komplementären Formation in der Form einer Aussparung (42), die an der Artikelstützformation (16) definiert wird, in der die Stege (24) auf eine gleitende Weise aufgenommen werden können, **dadurch gekennzeichnet, dass** die Stege (24) und die komplementären Aussparungen (42) jeweils ein Schwalbenschwanz-Querschnittsprotil haben,

2. System (10) nach Anspruch 1, **dadurch gekennzeichnet, dass** wenigstens ein längliches Element (12.2) ein nicht rundes Querschnittsprofil har und eine Zahl von Elementeingriffsformationen (56) an dem Innenumfang der Klemmenaussparung (20) bereitgestellt wird, um den Querschnittsumfang des nicht runden länglichen Elements (12.2) elastisch in Eingriff zu nehmen.

3. System (10) nach Anspruch 1, wobei die Klemme (14) eine Verriegelung (26) einschließt, die an Enden (28) der zwei Arme (22) befestigt werden kann und dafür konfiguriert ist, eine nach inner gerichtete Vorspannung auf die Enden (28) der Arme (22) auszuüben, um sie enger zusammenzudrücken und **dadurch** dazu beizutragen, das längliche Element (12) in Position innerhalb der Aussparung (20) zu halten, **dadurch gekennzeichnet, dass** die Verriegelung (26) einen Hauptteil (32), der schwenkbar an dem einen Arm (22) der Klemme (14) befestigt werden kann, und einen Verknüpfungsteil (30), der schwenkbar an dem Ende (28) des anderen Arms (22) der Klemme (14) befestigt werden kann, einschließt, wobei der Hauptteil (32) und der Verknüpfungsteil (30) schwenkbar verbunden sind, so dass die Verriegelung (26) in einer Übertotpunkt-Konfiguration arbeiten kann, wobei der Hauptteil (32) und der Verknüpfungsteil (30) in einem großen Winkel im Verhältnis zueinander ausgerichtet werden können, wenn sich die Verriegelung (26) in einem freien Zustand befindet, und wobei der Hauptteil (32) und der Verknüpfungsteil (30) in einem kleinen Winkel im Verhältnis zueinander ausgerichtet werden können, wenn sich die Verriegelung (26) in einem Greifzustand befindet, wobei eine elastische Vorspannung des Hauptteils (32) die Verriegelung (26) in dem Greifzustand zurückhält.

4. System (10) nach Anspruch 1, **dadurch gekennzeichnet, dass** die Stützformation (16) wenigstens eine Artikeleingriffsformation (40) definiert, die eine Klemme (48) einschließt, um einen Artikel durch Zusammenpressen desselben zwischen Klemmbacken (50*,* 52) der Klemme (48) zu stützen.

5. System nach Anspruch 1, **dadurch gekennzeichnet, dass** es eine Lichtarmatur (62) einschließt, die an der Klemme (14) befestigt werden kann.

6. Klemme (14), die an einem länglichen Element (12) befestigt werden kann und der eine Artrkelstützformation (16) nach Anspruch 1 befestigt werden kann, die Klemme (14) eine Aussparung (20) definiert, die von zwei elastischen Armen (22) flankiert wird, so das längliche Element (12) in der Aussparung (20) auf eine klammernde Weise aufgenommen werden kann, um durch die nach innen gerichtete Elastizität der Arme (22) lösbar in Position gehalten zu werden.
wobei mehrere Befestigungsformationen in der Form mehrerer Stege (24) an einem Außenumfang der Klemme (14) definiert werden, woran wenigstens eine Artikelstützformation (16) lösbar befestigt werden kann, durch Aufnehmen der Befestigungsformation (24) in einer komplementären Formation des Form einer Aussparung (42), die an der Artikelstützformation (16) definiert wird, in der die Stege (24) auf eine gleitende Weise aufgenommen werden können, **dadurch gekennzeichnet, dass** die Stege (24) und die komplementären Aussparungen (42) jeweils ein Schwalbenschwanz-Querschnittsprofil haben.

## Revendications

1. Système (10) pour supporter au moins un article, ledit système englobant :
une structure de support, englobant au moins un élément allongé (12) ;
au moins une bride de serrage (14) définissant un évidement (20) flanqué par deux bras élastiques (22), et pouvant être fixée de manière amovible sur l'élément allonge (12), la bride de serrage (14) prouvant être fixée de manière amovible sur l'élément allongé (12) par réception de l'élément allongé (12) dans l'évidement (20) par encliquetage, en vue d'un maintien amovible dans sa position sur l'élément allongé (12) par la force élastique dirigée vers l'intérieur des bras (22) ; et
une structure de support de l'article (16) pouvant être fixée sur la bride de serrage (14), plusieurs structures de fixation sous forme de plusieurs nervures (24) étant définies sur une périphérie externe de la bride de serrage (14), sur lesquelles au moins une structure de support de l'article (16) peut être fixée de manière amovible, par réception de la structure de fixation (24) dans une structure complémentaire sous forme d'un évidement (42), défini sur la structure de support de l'article (16), dans laquelle les nervures (42) peuvent être reçues de manière coulissante, **caractérisé en ce que** les nervures (24) et les évidements complémentaires (24) ont chacun un profil à section transversale en queue d'aronde.

2. Système (10) selon la revendication 1, **caractérise en ce qu'**au moins un élément allongé (12.2) a un profil de section transversale non circulaire, plusieurs structures d'engagement de l'élément (56) étant formées sur la périphérie interne de l'évidement de la bride de serrage (20) en vue d'un engagement élastique dans la périphérie de la section transversale de l'élément allongé non circulaire (12.2).

3. Système (10) selon la revendication 1, dans lequel la bride de serrage (14) englobe un verrouillage (26), pouvant être fixé sur les extrémités (28) des deux bras (22) et configuré de sorte à exercer une poussée dirigée vers l'intérieur sur les extrémités (28) des bras (22), pour les rapprocher davantage par poussée et faciliter ainsi le maintien de l'élément allongé (12) dans sa position dans l'évidement (20), **caractérisé en ce que** le verrouillage (26) englobe une partie principale (32), pouvant être fixée de manière pivotante sur un bras (22) de la bride de serrage (14), et une partie de liaison (30), pouvant être fixée de manière pivotant sur l'extrémité (28) de l'autre bras (22) de la bride de serrage (14), la partie principale (32) et la partie de liaison (30) étant connectées de manière pivotante, de sorte que le verrouillage (26) peut fonctionner dans une configuration centrale intermédiaire, dans laquelle la partie principale (32) et la partie de liaison (30) peuvent être orientées à un grand angle l'une par rapport à l'autre, lorsque le verrouillage (26) se trouve dans un état libre, et dans laquelle la partie principale (32) et la partie de liaison (30) peuvent être orientées à un petit angle l'une par rapport à l'autre lorsque le verrouillage (26) se trouve dans un état bloqué, une poussée élastique de la partie principale (32) retenant le verrouillage (26) dans l'état bloqué.

4. Système (10) selon la revendication 1, **caractérisé en ce que** la structure de support (16) définit au moins une structure d'engagement d'un article (40) englobant une bride de serrage (48) pour supporter un article en le sertissant entre les mâchoires (50,52) de la bride de serrage (48).

5. Système selon la revendication 1, **caractérisé en ce qu'**il englobe un dispositif d'éclairage (62) pouvant être fixé sur la bride de serrage (14).

6. Bride de serrage (14) pouvant être fixée sur un élément allongé (12) sur laquelle peut être fixée une structure support de l'article (16) selon la revendication 1, la bride de serrage (14) définissant un évidement (20) flanqué par deux bras élastiques (22), de sorte que l'élément allongé (12) peut être reçu dans l'évidement (20) par encliquetage, en vue d'un maintien amovible dans sa position par la force élastique dirigée vers l'intérieur des bras (22) ;
plusieurs structures de fixation, sous forme de plusieurs nervures (24) étant définies sur une périphérie externe de la bride de serrage (14), sur lesquelles au moins une structure de support de l'artii:le (16) peut être fixée de manière amovible, par réception de la structure de fixation (24) dans une structure complémentaire sous forme d'un évidement (42), défini sur la structure de support de l'article (16), dans laquelle les nervures (24) peuvent être reçues de manière coulissante, **caractérisée en ce que** les nervures (24) et les évidements complémentaires (42) ont chacun un profil à section transversale en queue d'aronde.
